# FASCICULE DE BREVET EUROPEEN

(11) **EP 4 323 238 B1**
(45) Date de publication et mention de la délivrance du brevet: **31.12.2025**
(21) Numéro de dépôt: 22721759.3
(22) Date de dépôt: 08.04.2022
(51) Int. Cl.: B60R 16/023, B60R 16/04, B62D 65/04, H01H 85/20

(54) **AGENCEMENT COMPRENANT UNE PROTECTION POUR BOÎTIER DE FUSIBLE DE VEHICULE**
ANORDNUNG MIT EINER SCHUTZVORRICHTUNG FÜR EINEN SICHERUNGSKASTEN EINES FAHRZEUGS
ARRANGEMENT COMPRISING A PROTECTION DEVICE FOR A VEHICLE FUSE BOX

(30) Priorité: 15.04.2021 FR 2103920
(43) Date de publication de la demande: 21.02.2024
(73) Titulaire: Renault s.a.s, 92100 Boulogne Billancourt (FR)
(72) Inventeur: GHIRARDINI, Armand, 78084 GUYANCOURT CEDEX (FR)
(86) Numéro de dépôt international: PCT/EP2022/059514
(87) Numéro de publication internationale: WO 2022/218874

(56) Documents cités:
- EP-A1- 2 186 686
- WO-A1-97/40510
- FR-A1- 3 025 572
- FR-A1- 3 081 085
- JP-B2- 4 096 431
- US-A1- 2014 017 529
- US-A1- 2017 345 601

## Description

### Domaine technique de l'invention

L'invention concerne un agencement comprenant une protection destinée à protéger un boîtier de fusible pour véhicule en cas de choc. L'invention porte encore sur une caisse comprenant un tel agencement. L'invention porte encore sur un véhicule comprenant une telle caisse ou un tel agencement. L'invention porte enfin sur un procédé de montage d'une telle caisse.

### Etat de la technique antérieure

Un véhicule, en particulier un véhicule automobile, comprend généralement des dispositifs de sécurité. Ces dispositifs de sécurité requièrent de l'énergie électrique fournie par une batterie. Ainsi, de tels dispositifs de sécurité sont connectés à la batterie, généralement par l'intermédiaire d'au moins un fusible. Un tel fusible est généralement implanté dans un boîtier. Une telle batterie et un tel boîtier à fusible sont généralement implantés dans le compartiment avant du véhicule, aussi appelé compartiment moteur lorsqu'il est destiné à recevoir un moteur thermique et/ou un moteur électrique. Un tel compartiment avant est contraint en termes d'espace et dispose donc de très peu de place disponible.

Or, en cas de choc, en particulier de choc frontal, il convient d'éviter des dommages sur le boîtier de fusible et la batterie afin d'assurer le fonctionnement optimal des dispositifs de sécurité. US 2017/345601 A1 décrit un moyen de protection mécanique d'un boitier de fusible rapporté sur une batterie. En effet, pour fonctionner correctement, ces dispositifs de sécurité requièrent une alimentation électrique au moins pendant une courte période suivant le début du choc. Ainsi, lors d'un choc, il convient d'éviter la destruction du boîtier de fusible ce qui occasionnerait la destruction du fusible, et/ou la coupure ou l'endommagement de câblages électriques, engendrant l'ouverture du ou des circuits électriques. Une telle situation rendrait les dispositifs de sécurités inopérants.

### Présentation de l'invention

Le but de l'invention est de fournir un agencement remédiant aux inconvénients ci-dessus. En particulier, l'invention propose une solution permettant l'adjonction d'un boîtier de fusible à proximité immédiate d'une batterie, en particulier du côté du conducteur du véhicule, tout en facilitant le montage de la batterie.

### Résumé de l'invention

Pour atteindre cet objectif, l'invention porte sur un agencement pour véhicule, notamment pour véhicule automobile, comprenant :
- un boîtier de fusible,
- un premier élément, notamment une batterie,
- un deuxième élément, notamment un moyen d'assistance au freinage,
- une protection destinée à protéger le boîtier de fusible en cas de choc, notamment en cas de choc frontal,

le boîtier de fusible venant au moins partiellement au-dessus du premier élément,
la protection comprenant un moyen de pré-maintien du boîtier de fusible dans une position de montage de sorte à faciliter le montage du premier élément à proximité du boîtier de fusible.

Le boîtier de fusible peut s'étendre, ou s'étendre sensiblement, notamment selon la direction longitudinale d'un tel véhicule, entre la protection et le premier élément, la protection pouvant s'étendre, ou s'étendre sensiblement, entre le boîtier de fusible et le deuxième élément.

Le moyen de pré-maintien peut comprendre une encoche, notamment une encoche de forme rectangulaire ou sensiblement rectangulaire.

La protection peut être conformée en tôle, notamment en tôle d'acier, et/ou peut comprendre au moins une nervure et/ou au moins un pli.

Le boîtier de fusible peut comprendre une première partie, une deuxième partie, et un moyen de fixation de la première partie sur la deuxième partie, notamment de sorte à pouvoir séparer la première partie de la deuxième partie pour faciliter le montage de l'élément.

La première partie ou la deuxième partie peut comprendre un moyen de connexion au premier élément, notamment une cosse de connexion à une borne d'une batterie.

Le deuxième élément peut comprendre une butée, notamment une butée en saillie biseautée, pouvant venir déplacer la protection de sorte à déplacer le boîtier de fusible et/ou le premier élément en cas de choc, notamment à le ou les déplacer latéralement en cas de choc frontal.

L'agencement peut comprendre un support apte à positionner et/ou à maintenir en position le premier élément, la protection pouvant être fixée au support, notamment par soudage.

L'invention porte encore sur une caisse comprenant un agencement tel que défini précédemment.

L'invention porte encore sur un véhicule, notamment un véhicule automobile, comprenant une caisse telle que définie précédemment ou un agencement tel que défini précédemment.

L'invention porte encore sur un procédé de montage d'une caisse telle que définie précédemment, le procédé comprenant :
- une étape de fourniture d'une partie d'une caisse,
- éventuellement suivie d'une étape de fixation d'un support apte à positionner et/ou à maintenir en position le premier élément,
- suivie d'une étape de fixation d'une protection, notamment sur le support, notamment par soudage,
- suivie d'une étape de blocage dans une position de montage d'un boîtier de fusible au sein d'un moyen de pré-maintien de la protection,
- suivie d'une étape de fixation d'un premier élément, notamment sur le support,
- suivie d'une étape de déblocage du boîtier de fusible depuis le moyen de pré-maintien vers une position finale permettant la connexion du boîtier de fusible au premier élément.

### Présentation des figures

Ces objets, caractéristiques et avantages de la présente invention seront exposés en détail dans la description suivante d'un mode de réalisation et d'un mode d'exécution d'un procédé de montage, faite à titre non-limitatif en relation avec les figures jointes parmi lesquelles :
[Fig. 1] La figure 1 est une vue schématique d'un véhicule automobile selon un mode de réalisation.
[Fig. 2] La figure 2 est une vue en perspective d'un agencement selon un mode de réalisation.
[Fig. 3] La figure 3 est une vue de dessus de l'agencement selon le mode de réalisation.
[Fig. 4] La figure 4 est une vue en perspective partielle de l'agencement selon le mode de réalisation.
[Fig. 5] La figure 5 est une vue en perspective partielle de l'agencement selon le mode de réalisation.
[Fig. 6] La figure 6 est une vue en perspective d'une protection selon un mode de réalisation.
[Fig. 7] La figure 7 est une autre vue en perspective de la protection selon le mode de réalisation.
[Fig. 8] La figure 8 est une vue en perspective partielle d'un boîtier de fusible selon un mode de réalisation.
[Fig. 9] La figure 9 est une vue en perspective du boîtier de fusible selon le mode de réalisation.
[Fig. 10] La figure 10 est une vue en perspective de la protection fixée sur un support selon le mode de réalisation.
[Fig. 11] La figure 11 est une vue en perspective de détail de la fixation de la protection sur le support selon le mode de réalisation.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

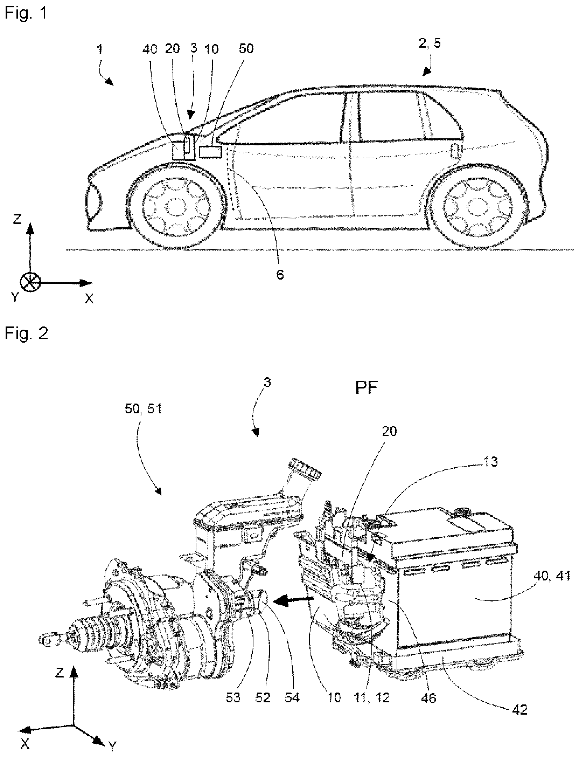

La figure 1 illustre schématiquement un véhicule, de préférence un véhicule automobile 1. Le véhicule a de préférence une motorisation électrique. Le véhicule peut avoir une motorisation thermique ou encore une motorisation de type hybride. Le véhicule comprend une caisse 2. La caisse 2 ou le véhicule comprend un agencement 3.

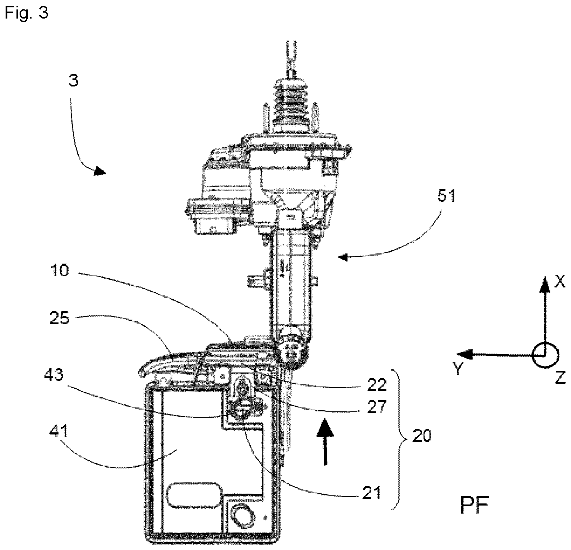

Comme illustré sur les figures 2 et 3, l'agencement 3 comprend un boîtier de fusible 20. Par boîtier de fusible 20, on entend un boîtier comprenant, logeant, renfermant, au moins un fusible de protection d'au moins un circuit électrique. Un tel fusible (non illustré) est par exemple de type thermique.

De préférence, le circuit protégé par ce fusible est l'installation générale électrique du véhicule, par exemple de tension de l'ordre de 12V.

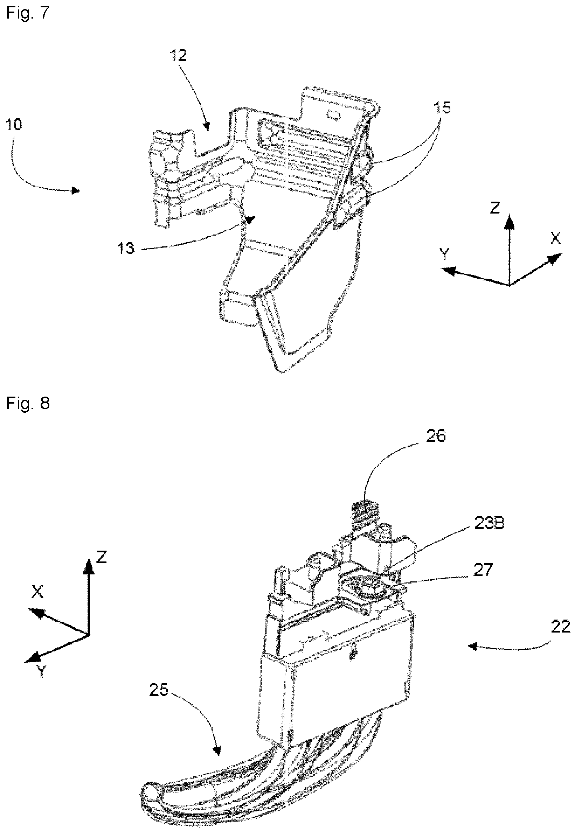

Par exemple, comme illustré notamment sur les figures 3, 4, 5, et 9, le boîtier de fusible 20 comprend une première partie 21 et une deuxième partie 22 (figure 8). Le boîtier 20 comprend encore un moyen de fixation 23 de la première partie 21 avec, et/ou sur, la deuxième partie 22. Par exemple, le moyen de fixation 23 comprend un goujon 23A, ou tige filetée, et un écrou 23B. Par exemple, la première partie 21 comprend au moins en partie le moyen de fixation 23, la deuxième partie 22 comprenant un trou, ou orifice, destiné au passage du goujon 23A. Par exemple, la deuxième partie 22 comprend une platine 27 dans laquelle le trou est ménagé. Ainsi, après que le goujon 23A ait traversé le trou de la platine 27, la coopération du taraudage de l'écrou 23B avec le filetage du goujon 23A permet de fixer la première partie 21 sur la deuxième partie 22.

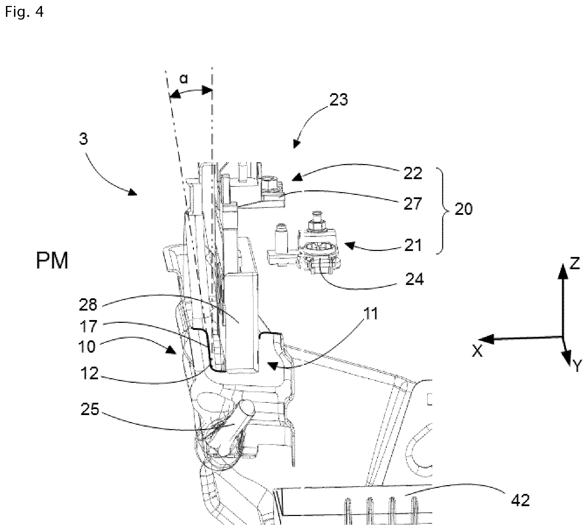

L'agencement 3 comprend encore un premier élément 40. De préférence, ce premier élément est une batterie 41, par exemple de tension de l'ordre de 12V. Le ou les fusibles du boîtier 20 est ou sont destinés à être relié(s) électriquement au circuit électrique alimenté par la batterie 41. La première partie 21 du boîtier de fusible, ou la deuxième partie 22, comprend de préférence un moyen de connexion 24 à la batterie 41. Le moyen de connexion 24 est par exemple une cosse de connexion à une borne 43 de la batterie 41, comme illustré sur les figures 3 et 4.

L'agencement comprend encore un deuxième élément 50. Par exemple, le deuxième élément est un moyen, ou dispositif, d'assistance au freinage 51 du véhicule. Le moyen d'assistance au freinage comprend par exemple un maître-cylindre 53. Le moyen d'assistance au freinage 51 comprend par exemple une butée 52, cette butée s'étendant par exemple en direction de la batterie 41. Cette butée est par exemple ménagée en saillie depuis le maître-cylindre 53. Comme illustré sur la figure 2, cette butée 52 est par exemple biseautée.

A noter que l'agencement est disposé du côté du conducteur du véhicule sur les figures, ce côté conducteur étant à droite.

Comme illustré sur la figure 3 notamment, le boîtier de fusible 20 vient au moins partiellement au-dessus de la batterie 41. Plus précisément, une partie de la platine 27, et éventuellement l'intégralité de la première partie 21 du boîtier 20 s'étend au-dessus de la batterie 41.

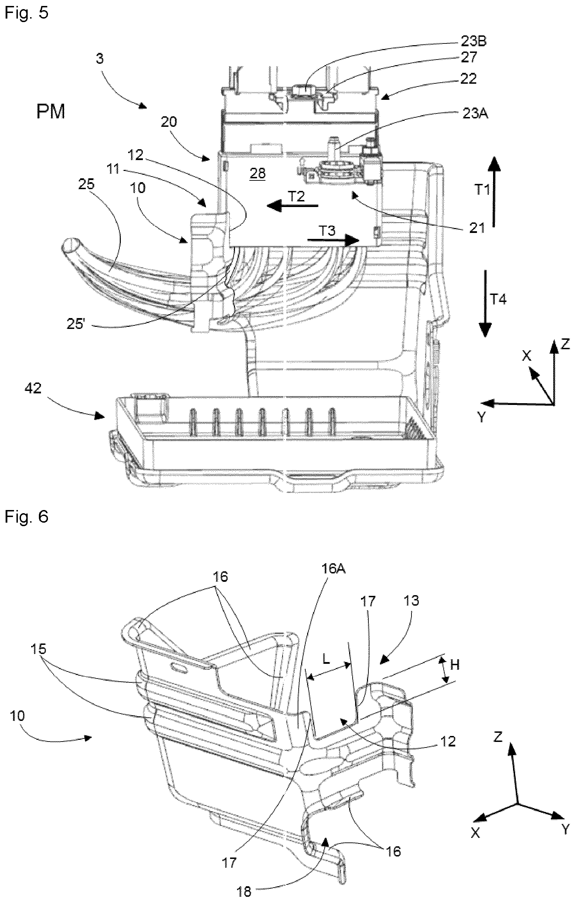

L'agencement 3 comprend encore une protection 10 illustrée sur les figures 6, 7 et 10 notamment. La protection 10 est notamment destinée à protéger le boîtier de fusible 20 en cas de choc, en particulier en cas de choc frontal du véhicule. La protection 10 est avantageusement conformée en tôle, par exemple en tôle d'acier. La protection 10 comprend de préférence au moins une nervure 15, par exemple s'étendant depuis un plan sensiblement transversal et vertical. La protection 10 comprend de préférence au moins un pli 16 au niveau de ses arêtes. De tel plis permettent de rigidifier la protection sans augmenter son épaisseur et avec peu d'influence sur sa masse.

La protection 10 comprend un moyen de pré-maintien 11 du boîtier de fusible 20 dans une position de montage PM. Cette position de montage PM est illustrée sur les figures 4 et 5. Comme il sera détaillé par la suite, cette position de montage PM du boîtier de fusible 20 sert à faciliter le montage de la batterie. Le moyen de pré-maintien 11 comprend une encoche 12 ménagée dans la protection 10, dans une face de la protection s'étendant sensiblement verticalement et longitudinalement. En cas de deuxième partie 22 du boîtier 20 comprenant une embase 28 parallélépipédique comme dans le mode de réalisation illustré, l'encoche 12 a une forme rectangulaire ou sensiblement rectangulaire, ou carrée, ou sensiblement carrée. Avantageusement, l'encoche 12 comprend des arêtes 17 avant et arrière par exemple parallèles ou sensiblement parallèles (figure 6). De préférence, ces arêtes 17 sont inclinées d'un angle α vers l'arrière par rapport à la direction verticale (illustré sur la figure 4). L'angle α est par exemple compris entre 5 degrés et 12 degrés, par exemple de l'ordre de 8 degrés. Comme illustré sur la figure 6, la longueur L de l'encoche selon la direction longitudinale entre les deux arêtes 17 est au moins égale à l'épaisseur selon cette direction de l'embase 28. Par embase 28, on entend éventuellement une embase comprenant un cache ou capot ou couvercle. Par exemple la hauteur H de l'encoche 12, selon la direction verticale ou sensiblement verticale, est de l'ordre de 25 mm. Ces dimensions dépendent de la forme et/ou de la répartition de la masse de l'embase 28. Avantageusement, l'encoche 12 est ménagée au plus près d'un rayon ou pli 16A de la protection 10.

De préférence, selon la direction longitudinale du véhicule, le boîtier de fusible 20 s'étend, ou s'étend sensiblement, entre la protection 10 et la batterie 41. De préférence encore, la protection 10 s'étend, ou s'étend sensiblement, entre le boîtier de fusible 20 et l'assistance de freinage 51.

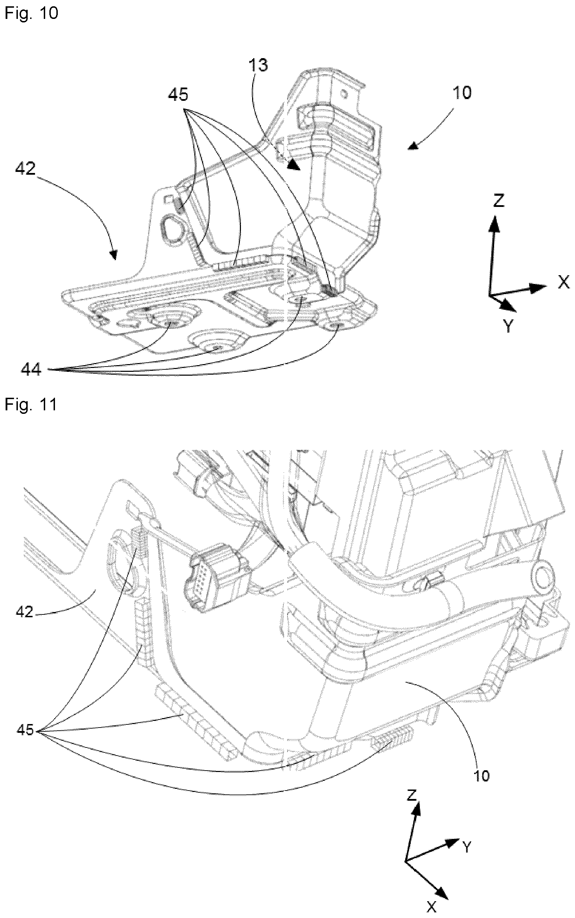

Comme illustré sur les figures 2, 4, 5, 10 et 11, l'agencement 3 comprend de préférence encore un support 42 apte à positionner et/ou à maintenir en position la batterie 41. Un tel support 42 est aussi appelé bac de batterie. Par exemple, la protection 10 est fixée au support 42. Avantageusement, si les matériaux utilisés pour le support 42 et la protection 10 le permettent, la fixation entre les deux est assurée par soudure, par exemple par des cordons de soudure 45. Alternativement, cette fixation de la protection 10 sur le support 42 peut être assurée par brasage et/ou collage et/ou boulonnage. Avantageusement, le support 42 comprend des bossages percés 44, comme illustré sur la figure 10. De tels bossages facilitent la fixation du support 42 sur une partie 5 de la caisse, notamment par des systèmes vis-écrous.

Un mode d'exécution d'un procédé de montage de la caisse 2 va maintenant être décrit.

Dans un premier temps, on procède à une étape de fourniture d'une partie 5 de la caisse 2.

Eventuellement, on fixe le support 42 de positionnement et/ou de maintien en position de la batterie 41 sur la partie 5. Cette fixation peut être assurée par boulonnage sur la partie 5 de la caisse, en particulier en utilisant les bossages percés 44. On procède ensuite à une étape de fixation directe ou indirecte de la protection 10 sur la partie 5 de la caisse. Par exemple, la fixation se fait sur le support 42 déjà fixé à la partie de caisse. Cette fixation peut être assurée par soudage de la protection 10 sur le support 42, via les cordons de soudure 45.

Alternativement, on fixe d'abord la protection 10 sur le support 42, par exemple par soudage, puis on fixe l'ensemble protection avec support sur la partie de caisse, par exemple par l'intermédiaire des bossages 44 du support.

Alternativement encore, on s'affranchit du support 42 et on fixe directement la protection 10 sur la partie de caisse, par exemple par soudage. Dans ce cas, la réception de la batterie est par exemple prévue directement sur la partie de caisse.

On passe ensuite à une étape de blocage dans la position de montage PM du boîtier de fusible 20 au sein de l'encoche 12, comme illustré sur la figure 5. Pour ce faire, on translate d'abord le boîtier 20 selon la direction verticale vers le haut (flèche T1), puis on translate le boîtier selon la direction transversale vers l'encoche 12 (flèche T2) jusqu'à ce que l'embase parallélépipédique 28 se retrouve coincée, tout du moins maintenue, au sein de l'encoche 12. A noter que ce déplacement T2 se fait de préférence vers l'extérieur du véhicule. Le déplacement T2 est ainsi stoppé lors du contact d'une première sortie de câblage 25' contre la protection 10, au niveau et/ou sous l'encoche 12. De préférence, du fait de la translation T1 vers le haut, le câblage 25 se retrouve ainsi contre un évidement 18 de la protection 10 illustré sur la figure 6. Le câblage est alors de préférence sous-contrainte, éventuellement déformé, l'embase 28 étant bloquée à une certaine hauteur par l'encoche 12 et le câblage ne pouvant pas monté au-dessus de l'évidement 18. Cette contrainte favorise le maintien en position PM du boîtier 20. Bien que cela ne soit pas illustré, entre la translation T1 et la translation T2, de préférence on décale et/ou on pivote le boîtier 20 vers l'arrière, autour d'un axe sensiblement transversal, de l'ordre d'un angle α (figure 4) qui sera précisé par la suite. Ainsi, la deuxième partie 22, notamment la platine 27, ne peut pas interférer avec la batterie lors de son montage.

De préférence, préalablement à l'étape de blocage du boîtier dans la position de montage PM, on désolidarise la première partie 21 de la deuxième partie 22 du boîtier 20, par exemple en dévissant l'écrou 23B du goujon 23A puis en éloignant le goujon (et donc la première partie 21) du trou ménagé dans la platine 27. La première partie 21 peut ainsi être déplacée latéralement afin de ne pas se retrouver au-dessus de l'emplacement de la batterie 41.

On procède ensuite à une étape de placement de la batterie, de préférence suivie d'une étape de fixation de la batterie 41 sur le support 42.

De préférence, on procède ensuite à la fixation de la première partie 21 avec la deuxième partie 22, par exemple en faisant passer le goujon 23A à travers la platine 27 et en vissant l'écrou 23B sur le goujon 23A.

Une fois la batterie placée et fixée, on procède à une étape de déblocage du boîtier de fusible 20 depuis l'encoche 12. Autrement dit, on déplace l'embase 28 depuis l'encoche vers une position finale PF. Pour cela, on fait se translater l'embase 28 transversalement (flèche T3), dans le sens opposé à la translation T2, puis on la fait se translater verticalement, vers le bas (flèche T4 de sens opposé à la flèche T1). A noter que pour faciliter ces translations, une languette 26 s'étend en saillie vers le haut, par exemple dans un plan sensiblement vertical et transversal. Cette languette, illustrée sur la figure 8, est de préférence dotée de rainures et/ou est ondulée de sorte à améliorer la préhension.

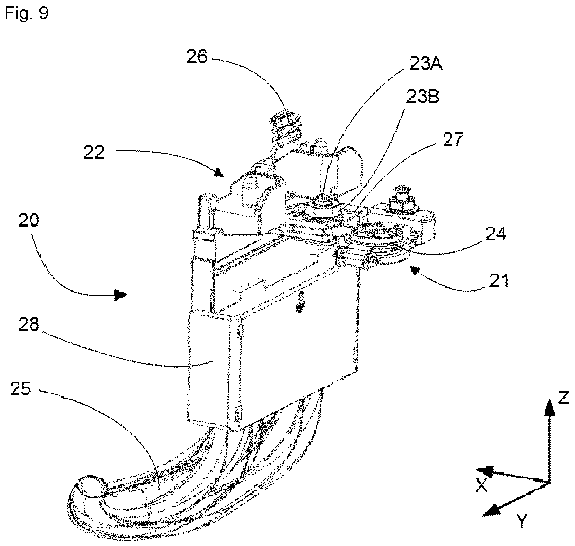

On procède ensuite à la connexion du boîtier de fusible 20 à la batterie, plus précisément, à la connexion de la cosse 24 (figure 9) sur la borne 43 de la batterie (figure 3).

A noter qu'une assistance aide un opérateur à apporter et placer la batterie du fait du poids important de la batterie. En effet, il convient d'éviter des efforts conséquents à l'opérateur, notamment du fait que ces efforts se répèteraient pour chaque implantation de batterie. Seulement, cette assistance ne permet qu'une translation verticale, voire strictement verticale. Autrement dit, la batterie ne peut pas être pivotée ou tournée par l'assistance autour d'axes compris dans un plan longitudinal et transversal ou sensiblement longitudinal et transversal. En outre, la batterie ne peut pas être translatée autrement que selon la direction verticale par l'assistance.

Grâce à l'encoche 12 ménagée dans la protection 10, le boîtier 20 est retenu en position PM. Ainsi, tout le volume qui va être occupé par la batterie ainsi que l'espace au-dessus de celle-ci est intégralement libre. Aucun élément ne peut interférer avec la batterie 41 lors de son implantation, et ce, malgré la translation purement verticale de la batterie via l'assistance. L'emplacement de l'encoche proche du rayon 16A permet d'exploiter au mieux l'épaisseur de la protection 10 selon la direction longitudinale pour décaler au maximum l'embase 28 vers l'arrière. En outre, l'encoche 12 évite tout basculement, dû à la gravité, du boîtier de fusible 20 vers l'avant, c'est-à-dire vers l'emplacement de la batterie 41. L'orientation de l'encoche vers l'arrière, plus précisément de ses deux arêtes 17, par exemple de l'ordre de 8 degrés (angle α illustré sur la figure 4), concourt à empêcher ce basculement. Ainsi, grâce à l'encoche 12, on s'affranchit de tout risque d'interférence du boîtier 20 avec la batterie au cours de l'implantation de la batterie.

A noter que le démontage de la première partie 21 par rapport à la deuxième partie 22 du boîtier 20 permet de limiter l'amplitude de déplacement selon la direction longitudinale du boîtier vers la position PM pour le passage de la batterie. Cependant, cette particularité permet également une première partie standard quelle que soit la batterie, voire quel que soit le véhicule. Pour rappel, la première partie 21 comprend la cosse de connexion 24 à la batterie. Ainsi, seule la deuxième partie 22 peut ne pas être standardisée et être adaptée à chaque type de véhicule.

Comme évoqué précédemment et illustré sur la figure 2, l'assistance au freinage, par exemple le maître-cylindre 53, comprend la butée 52 en saillie. De préférence, cette butée s'étend selon la direction longitudinale, vers l'avant du véhicule. Cette butée comprend de préférence un biseau comprenant une face 54. Cette face 54 s'étend dans un plan vertical ou sensiblement vertical, orienté de préférence de l'ordre de 45 degrés par rapport à la direction longitudinale. Ainsi, en cas de choc frontal, l'ensemble comprenant la batterie 41 et la protection 10, et le support 42 le cas échéant, recule vers l'arrière (flèche sur la figure 2). Au cours de cette translation vers l'arrière due au choc, la protection 10 entre en contact avec la butée 52. La face 54 du biseau joue alors un rôle de guide. En effet, le biseau de la butée 52 coopère avec la protection 10 sans percer la protection du fait de la rigidité de la protection 10. L'orientation de la face 54 du biseau engendre un pivotement ou rotation de la protection et de la batterie, et le cas échéant, du support 42, autour d'un axe sensiblement vertical. De préférence, en cas de batterie agencée à droite du compartiment moteur (cas illustré), le pivotement de la protection et de la batterie se fait de sorte à diriger la batterie vers l'extérieur côté droit. A l'inverse, de préférence, en cas de batterie installée à gauche du compartiment moteur, le pivotement de la protection et de la batterie se fait de sorte à diriger la batterie vers l'extérieur côté gauche. A noter que du fait de l'inertie du choc, le pivotement peut être suivi d'une translation vers l'extérieur du véhicule, côté droit en cas de batterie à droite et côté gauche en cas de batterie à gauche. En résumé, après le choc, la batterie se retrouve à côté de l'assistance de freinage 51, et l'intégrité de la batterie est conservée.

Pour rappel, le boîtier de fusible 20 est disposé entre la protection 10 et la batterie 41. Ainsi, le boîtier de fusible « suit » la translation vers l'arrière, puis le pivotement, voire l'éventuelle translation qui suit ces déplacements. La protection 10 est rigide, grâce à ses nervures 15 et/ou plis 16, en particulier si la protection est fixée sur le support 42. La batterie 41 est de préférence un parallélépipède rectangle relativement rigide. Ainsi, le boîtier de fusible 20 est protégé au cours de tous les déplacements dus au choc. En effet, comme illustré en particulier sur les figures 6, 7 et 10, la protection 10 a une forme de coque creuse. Une cavité 13 permet ainsi de créer un volume supérieur au volume du boîtier de fusible 20, au moins supérieur au volume de l'embase 28, de sorte à protéger le boîtier au cours d'un crash. En effet, la cavité 13 est sensiblement « fermée » à l'avant par une face arrière 46 de la batterie 41, comme illustré sur la figure 2. Ainsi, en cas de collision, en particulier de collision frontale, le capot 10 a un rôle protecteur pour le boitier fusible thermique 20.

Grâce à la présence de la protection 10 intercalée entre l'assistance de freinage 51 et la batterie 41 qui sont des éléments peu déformables lors d'un choc, le boîtier de fusible 20 ainsi que des câbles ou fils électriques 25, 25' de circuits électriques arrivant ou partant du boîtier 20 ne sont pas impactés. Le ou les fusibles de cette boîte demeurent également intacts pendant plusieurs dizaines de millisecondes après le début du choc, par exemple de l'ordre de 80 ms. Cette durée sans dommage permet la réactivité et le fonctionnement optimaux des dispositifs de sécurité utilisant de l'énergie électrique, en particulier les airbags. En effet, les circuits électriques afférents à ces dispositifs de sécurité ne disjonctent pas ou ne s'ouvrent pas intempestivement suite au choc. Ainsi, le respect de la règlementation en matière de sécurité des occupants du véhicule est assuré, notamment en cas de choc, en particulier d'un choc frontal.

En outre, grâce à la solution, en cas de collision frontale du véhicule qui comprend une batterie (par exemple une batterie de tension de l'ordre de 12V) située à l'avant, le fonctionnement de cette batterie pendant les premières dizaines de millisecondes du choc perdure ce qui concourt au déclenchement et fonctionnement normaux des dispositifs de sécurité.

En résumé, même en cas de batterie agencée dans le compartiment moteur sans espace derrière elle selon la direction longitudinale, par exemple du fait de la présence d'un élément tel que l'assistance de freinage, la solution permet de conserver l'intégrité de la batterie au cours d'un choc, en particulier frontal. En effet, la batterie ainsi que le boîtier de fusibles agencé au niveau de cette batterie pivotent, tournent, se décalent, s'éjectent, ce qui évite leur écrasement et/ou leur compression excessive. En outre, la solution limite, voire élimine toute intrusion dans un tablier 6 (figure 1). Il en résulte que le ou les fusibles au sein de la boîte 20, la batterie 41 et les câblages 25 sont préservés et continuent de fonctionner normalement.

Grâce à l'agencement, en particulier la protection 10, la batterie et la boîte de fusible peuvent être implantés systématiquement d'un même côté du compartiment moteur, indépendamment du fait que la direction soit agencée à droite (volant à droite) ou à gauche (volant à gauche). Il en résulte une standardisation au sein du compartiment moteur sur la chaîne de montage. En effet, que la batterie et le boîtier de fusibles aient un espace derrière selon la direction longitudinale pour pouvoir reculer en cas de choc frontal, ou qu'il n'y ait pas d'espace pour reculer, les dispositifs de sécurité fonctionnent correctement suite à un choc.

A noter que le boîtier de fusible 20 fait de préférence partie du câblage, ou circuit électrique, principal du véhicule. Ainsi, le boîtier requiert d'être implanté avant l'installation de la batterie. Grâce à l'encoche 12 ménagée dans la protection 10 pour maintenir le boîtier en position de montage PM, cet ordre de montage est respecté malgré la contrainte d'insertion de la batterie par le biais d'une assistance n'offrant que des translations selon un axe vertical. Autrement dit, la batterie peut être montée alors que la protection 10, le boîtier de fusible 20, et les câblages 25 sont installés. L'agencement 3 offre un positionnement du boîtier 20 entre la batterie 41 et la protection 10 de sorte à maximiser sa protection.

En résumé la protection 10 a été découpée de sorte à faciliter le montage de la batterie tout en évitant la destruction du boîtier de fusibles lors d'un choc. Bien que le boîtier de fusible 20 s'étende au-dessus de la batterie 41 en position finale PF (figures 2 et 3), une position intermédiaire de montage PM du boîtier autorise l'insertion de la batterie purement verticalement, de haut en bas.

De préférence, des rebords pliés 16 au niveau de l'évidement 18 empêchent toutes agressions des câbles, en particulier lors des translations T1 et T2 et du pivotement du boîtier réalisés pour le passage vers sa position de montage PM, ainsi que les mouvements vers la position finale PF.

La solution permet d'agencer le boîtier de fusible, et par conséquent le ou les fusibles, à proximité immédiate de la batterie. Cet emplacement au plus près de la source de courant est optimal pour disjoncter efficacement un circuit électrique si besoin.

Bien qu'il ait largement été décrit une protection et un boîtier de fusible disposés entre un premier élément de type batterie (à l'avant) et un deuxième élément de type assistance de freinage (à l'arrière), la protection et le boîtier peuvent être agencés entre une assistance de freinage (à l'avant) et une batterie (à l'avant). En outre, les premier et deuxième éléments peuvent être différents d'une batterie et d'une assistance de freinage, les premier et deuxième éléments étant de préférence peu déformables.

En remarque, la solution selon l'invention atteint donc l'objectif recherché de protéger un boîtier de fusibles lors d'un choc, notamment frontal, même en cas d'élément peu déformable derrière le boîtier, tout en facilitant l'insertion de la batterie, et présente les avantages suivants :
- elle est économique,
- elle peut être utilisée sur des véhicules à motorisation électrique, thermique ou hybride,
- la protection est facile à fabriquer car elle peut être obtenue par des procédés couramment utilisés dans le domaine de l'automobile, notamment l'emboutissage.

## Revendications

1. Agencement (3) pour véhicule (1), notamment pour véhicule automobile, comprenant :
- un boîtier de fusible (20),
- un premier élément (40), notamment une batterie (41),
- un deuxième élément (50), notamment un moyen d'assistance au freinage (51),
- une protection (10) destinée à protéger le boîtier de fusible (20) en cas de choc, notamment en cas de choc frontal,
le boîtier de fusible (20) venant au moins partiellement au-dessus du premier élément (40),
**caractérisé en ce que** la protection (10) comprend un moyen de pré-maintien (11) du boîtier de fusible (20) dans une position de montage (PM) de sorte à faciliter le montage du premier élément (40) à proximité du boîtier de fusible (20).

2. Agencement (3) selon la revendication précédente, **caractérisé en ce que**, notamment selon la direction longitudinale d'un tel véhicule (1), le boîtier de fusible (20) s'étend, ou s'étend sensiblement, entre la protection (10) et le premier élément (40), la protection (10) s'étendant, ou s'étendant sensiblement, entre le boîtier de fusible (20) et le deuxième élément (50).

3. Agencement (3) selon l'une des revendications précédentes, **caractérisé en ce que** le moyen de pré-maintien (11) comprend une encoche (12), notamment une encoche de forme rectangulaire ou sensiblement rectangulaire.

4. Agencement (3) selon l'une des revendications précédentes, **caractérisé en ce que** la protection (10) est conformée en tôle, notamment en tôle d'acier, et/ou comprend au moins une nervure (15) et/ou au moins un pli (16).

5. Agencement (3) selon l'une des revendications précédentes, **caractérisé en ce que** le boîtier de fusible (20) comprend une première partie (21), une deuxième partie (22), et un moyen de fixation (23) de la première partie (21) sur la deuxième partie (22), notamment de sorte à pouvoir séparer la première partie (21) de la deuxième partie (22) pour faciliter le montage de l'élément (40).

6. Agencement (3) selon la revendication précédente, **caractérisé en ce que** la première partie (21) ou la deuxième partie (22) comprend un moyen de connexion (24) au premier élément (40), notamment une cosse de connexion à une borne (43) d'une batterie (41).

7. Agencement (3) selon l'une des revendications précédentes, **caractérisé en ce que** le deuxième élément (50) comprend une butée (52), notamment une butée en saillie biseautée, venant déplacer la protection (10) de sorte à déplacer le boîtier de fusible (20) et/ou le premier élément (40) en cas de choc, notamment à le ou les déplacer latéralement en cas de choc frontal.

8. Agencement (3) selon l'une des revendications précédentes, **caractérisé en ce que** l'agencement (3) comprend un support (42) apte à positionner et/ou à maintenir en position le premier élément (40), la protection (10) étant fixée au support (42), notamment par soudage.

9. Caisse (2), **caractérisée en ce qu'**elle comprend un agencement (3) selon l'une des revendications précédentes.

10. Véhicule (1), notamment véhicule automobile, **caractérisé en ce qu'**il comprend une caisse (2) selon la revendication précédente ou un agencement (3) selon l'une des revendications 1 à 8.

11. Procédé de montage d'une caisse (2) selon la revendication 9, **caractérisé en ce qu'**il comprend :
- une étape de fourniture d'une partie (5) d'une caisse (2),
- éventuellement suivie d'une étape de fixation d'un support (42) apte à positionner et/ou à maintenir en position le premier élément (40),
- suivie d'une étape de fixation d'une protection (10), notamment sur le support (42), notamment par soudage,
- suivie d'une étape de blocage dans une position de montage (PM) d'un boîtier de fusible (20) au sein d'un moyen de pré-maintien de la protection (10),
- suivie d'une étape de fixation d'un premier élément (40), notamment sur le support (42),
- suivie d'une étape de déblocage du boîtier de fusible (20) depuis le moyen de pré-maintien vers une position finale (PF) permettant la connexion du boîtier de fusible (20) au premier élément (40).

## Patentansprüche

1. Anordnung (3) für ein Fahrzeug (1), insbesondere für ein Kraftfahrzeug, umfassend:
- einen Sicherungskasten (20),
- ein erstes Element (40), insbesondere eine Batterie (41),
- ein zweites Element (50), insbesondere eine Bremsunterstützungseinrichtung (51),
- eine Schutzvorrichtung (10), die dazu bestimmt ist, den Sicherungskasten (20) bei einem Aufprall, insbesondere bei einem Frontalaufprall, zu schützen,
wobei der Sicherungskasten (20) das erste Element (40) mindestens teilweise überragt,
**dadurch gekennzeichnet, dass** die Schutzvorrichtung (10) eine Einrichtung (11) zum provisorischen Halten des Sicherungskastens (20) in einer Montagestellung (PM) umfasst, so dass die Montage des ersten Elements (40) in der Nähe des Sicherungskastens (20) erleichtert wird.

2. Anordnung (3) nach dem vorhergehenden Anspruch, **dadurch gekennzeichnet, dass** sich der Sicherungskasten (20), insbesondere entlang der Längsrichtung eines solchen Fahrzeugs (1), zwischen, oder im Wesentlichen zwischen, der Schutzvorrichtung (10) und dem ersten Element (40) erstreckt, wobei sich die Schutzvorrichtung (10) zwischen, oder im Wesentlichen zwischen, dem Sicherungskasten (20) und dem zweiten Element (50) erstreckt.

3. Anordnung (3) nach einem der vorhergehenden Ansprüche, **dadurch gekennzeichnet, dass** die Einrichtung (11) zum provisorischen Halten eine Ausnehmung (12) umfasst, insbesondere eine rechteckige oder im Wesentlichen rechteckige Ausnehmung.

4. Anordnung (3) nach einem der vorhergehenden Ansprüche, **dadurch gekennzeichnet, dass** die Schutzvorrichtung (10) aus Blech, insbesondere aus Stahlblech, geformt ist und/oder mindestens eine Rippe (15) und/oder mindestens eine Abkantung (16) umfasst.

5. Anordnung (3) nach einem der vorhergehenden Ansprüche, **dadurch gekennzeichnet, dass** der Sicherungskasten (20) einen ersten Teil (21), einen zweiten Teil (22) und eine Befestigungseinrichtung (23) zur Befestigung des ersten Teils (21) an dem zweiten Teil (22) umfasst, insbesondere so, dass der erste Teil (21) von dem zweiten Teil (22) getrennt werden kann, um die Montage des Elements (40) zu erleichtern.

6. Anordnung (3) nach dem vorhergehenden Anspruch, **dadurch gekennzeichnet, dass** der erste Teil (21) oder der zweite Teil (22) eine Anschlusseinrichtung (24) zum Anschließen an das erste Element (40) umfasst, insbesondere einen Kabelschuh zum Anschließen an eine Klemme (43) einer Batterie (41).

7. Anordnung (3) nach einem der vorhergehenden Ansprüche, **dadurch gekennzeichnet, dass** das zweite Element (50) einen Anschlag (52), insbesondere einen abgeschrägten vorspringenden Anschlag, umfasst, der die Schutzvorrichtung (10) verlagert, so dass er den Sicherungskasten (20) und/oder das erste Element (40) bei einem Aufprall verlagert, insbesondere ihn/es oder sie bei einem Frontalaufprall seitlich verlagert.

8. Anordnung (3) nach einem der vorhergehenden Ansprüche, **dadurch gekennzeichnet, dass** die Anordnung (3) einen Träger (42) umfasst, der geeignet ist, das erste Element (40) zu positionieren und/oder in Position zu halten, wobei die Schutzvorrichtung (10) an dem Träger befestigt (42) ist, insbesondere durch Schweißen.

9. Karosserie (2), **dadurch gekennzeichnet, dass** sie eine Anordnung (3) nach einem der vorhergehenden Ansprüche umfasst.

10. Fahrzeug (1), insbesondere Kraftfahrzeug, **dadurch gekennzeichnet, dass** es eine Karosserie (2) nach dem vorhergehenden Anspruch oder eine Anordnung (3) nach einem der Ansprüche 1 bis 8 umfasst.

11. Verfahren zur Montage einer Karosserie (2) nach Anspruch 9, **dadurch gekennzeichnet, dass** es umfasst:
- einen Schritt des Bereitstellens eines Teils (5) einer Karosserie (2),
- gegebenenfalls gefolgt von einem Schritt des Befestigens eines Trägers (42), der geeignet ist, das erste Element (40) zu positionieren und/oder in Position zu halten,
- gefolgt von einem Schritt des Befestigens einer Schutzvorrichtung (10), insbesondere an dem Träger (42), insbesondere durch Schweißen,
- gefolgt von einem Schritt des Blockierens in einer Montageposition (PM) eines Sicherungskastens (20) innerhalb einer Einrichtung zum provisorischen Halten der Schutzvorrichtung (10),
- gefolgt von einem Schritt des Befestigens eines ersten Elements (40), insbesondere an dem Träger (42),
- gefolgt von einem Schritt des Freigebens des Sicherungskastens (20) aus der Einrichtung zum provisorischen Halten zu einer Endposition (PF) hin, die das Anschließen des Sicherungskastens (20) an das erste Element (40) ermöglicht.

## Claims

1. Arrangement (3) for a vehicle (1), notably for a motor vehicle, comprising:
- a fuse box (20),
- a first element (40), notably a battery (41),
- a second element (50), notably a brake booster (51),
- a protection device (10) designed to protect the fuse box (20) in the event of an impact, notably in the event of a frontal impact,
the fuse box (20) lying at least partially over the first element (40),
**characterized in that** the protection device (10) comprises a pre-holding means (11) for pre-holding the fuse box (20) in a mounting position (PM) so as to facilitate the mounting of the first element (40) in proximity to the fuse box (20).

2. Arrangement (3) according to the preceding claim, **characterized in that**, notably in the longitudinal direction of such a vehicle (1), the fuse box (20) extends, or substantially extends, between the protection device (10) and the first element (40), the protection device (10) extending, or substantially extending, between the fuse box (20) and the second element (50).

3. Arrangement (3) according to one of the preceding claims, **characterized in that** the pre-holding means (11) comprises a cutout (12), notably a cutout of rectangular or substantially rectangular shape.

4. Arrangement (3) according to one of the preceding claims, **characterized in that** the protection device (10) is formed from sheet metal, notably sheet steel, and/or comprises at least one rib (15) and/or at least one fold (16).

5. Arrangement (3) according to one of the preceding claims, **characterized in that** the fuse box (20) comprises a first part (21), a second part (22), and a fixing means (23) for fixing the first part (21) to the second part (22), notably such that the first part (21) is able to be separated from the second part (22) so as to facilitate the mounting of the element (40).

6. Arrangement (3) according to the preceding claim, **characterized in that** the first part (21) or the second part (22) comprises a connecting means (24) for connection to the first element (40), notably a terminal connector for connection to a terminal (43) of a battery (41) .

7. Arrangement (3) according to one of the preceding claims, **characterized in that** the second element (50) comprises a stop (52), notably a bevelled projecting stop, which moves the protection device (10) so as to move the fuse box (20) and/or the first element (40) in the event of an impact, notably, so as to move it or them laterally in the event of a frontal impact.

8. Arrangement (3) according to one of the preceding claims, **characterized in that** the arrangement (3) comprises a support (42) capable of positioning the first element (40) and/or of holding same in position, the protection device (10) being fixed to the support (42), notably by welding.

9. Vehicle body (2), **characterized in that** it comprises an arrangement (3) according to one of the preceding claims.

10. Vehicle (1), notably motor vehicle, **characterized in that** it comprises a body (2) according to the preceding claim or an arrangement (3) according to one of Claims 1 to 8.

11. Method for assembling a vehicle body (2) according to Claim 9, **characterized in that** it comprises:
- a step of supplying part (5) of a vehicle body (2),
- possibly followed by a step of fixing a support (42) capable of positioning the first element (40) and/or of holding same in position,
- followed by a step of fixing a protection device (10), notably on the support (42), notably by welding,
- followed by a step of immobilizing a fuse box (20) in a mounting position (PM) within a pre-holding means that pre-holds the protection device (10),
- followed by a step of fixing a first element (40), notably on the support (42),
- followed by a step of releasing the fuse box (20) from the pre-holding means to a final position (PF) allowing the connection of the fuse box (20) to the first element (40).
